# EUROPÄISCHE PATENTANMELDUNG

(11) **EP 1 602 838 A2**
(43) Veröffentlichungstag der Anmeldung: **07.12.2005**
(21) Anmeldenummer: 05450091.3
(22) Anmeldetag: 20.05.2005
(51) Int. Cl.: F16B 12/00

(54) **Steckverbindung mit Stabilisator**

(30) Priorität: 27.05.2004 AT 9182004
(71) Anmelder: Vinzenz Harrer, 8162 Neudorf bei Passail (AT)
(72) Erfinder: Vinzenz Harrer, 8162 Neudorf bei Passail (AT)
(74) Vertreter: Gibler, Ferdinand

(57) **Zusammenfassung**

Für eine Steckverbindung für lösbare Verbindungen in der Art eines Nut-Feder-Systems, wobei die Nut (1) wenigstens teilweise hinterschnitten und an zumindest einer ersten Stirnseite randoffen ist und die Feder gegengleich zur Nut ausgebildet ist, wobei der zur Längsrichtung der Nut (1) im wesentlichen senkrechte Nutquerschnitt in einem an die erste Stirnseite (2) anschließenden ersten Bereich (3) von der ersten Stirnseite (2) weg in Längsrichtung sich keilförmig verjüngend und in einem anschließenden zweiten Bereich (4) in Längsrichtung konstant bleibend ausgebildet ist, wobei der Nutquerschnitt zumindest im zweiten Bereich (4) hinterschnitten ist, wird zur zusätzlichen Stabilisierung bzw. Sicherung der Steckverbindung wenigstens ein Stabilisator (20) vorgeschlagen.

## Beschreibung

Die Erfindung betrifft eine Steckverbindung für lösbare Verbindungen in der Art eines Nut-Feder-Systems, wobei die Nut wenigstens teilweise hinterschnitten und an zumindest einer ersten Stirnseite randoffen ist und die Feder gegengleich zur Nut ausgebildet ist, wobei der zur Längsrichtung der Nut im wesentlichen senkrechte Nutquerschnitt in einem an die erste Stirnseite anschließenden ersten Bereich von der ersten Stirnseite weg in Längsrichtung sich keilförmig verjüngend und in einem anschließenden zweiten Bereich in Längsrichtung konstant bleibend ausgebildet ist, wobei der Nutquerschnitt zumindest im zweiten Bereich hinterschnitten ist.

Solche Steckverbindungen sind zur raschen und bequemen Verbindung von Metall-, Beton-, Kunststoff- und/oder Holzteilen geeignet. Derartige Steckverbindungen sind beispielsweise aus der AT 411 094 B bekannt.

Nachteilig an diesen Steckverbindungen ist, dass insbesondere bei solchen Steckverbindungen kleineren Durchmessers ein Spiel zur unerwünschten Verdrehung miteinander verbundener Teile verbleibt. Ein weiterer Nachteil besteht darin, dass solche Steckverbindungen nur bei solchen Anwendungen stabil sind, wo ein Einrasten im Wesentlichen gegen die Schwerkraft erfolgt. Bei einer horizontalen Nut-Feder-Ausrichtung, beispielsweise zur Montage von Trennwänden zwischen senkrechten Stehern, können die Teile leicht wieder auseinander gleiten. Daher ergibt sich bei diesen bekannten Steckverbindungen öfters die Situation, dass keine hinreichend stabile Verbindung entsteht.

Aufgabe der Erfindung ist es daher, eine Steckverbindung anzugeben, bei der auch bei relativ kleinen Abmessungen von Nut und Feder eine Verbindung ohne seitlichem bzw. drehendem Spiel erzielt wird.

Weitere Aufgabe der Erfindung ist es, eine Steckverbindung bereitzustellen, bei der die zu verbindenden Teile im verbundnen Zustand sicher verbunden gehalten werden und ein unerwünschtes Trennen der Teile zuverlässig vermieden wird.

Erfindungsgemäß wird dies dadurch erreicht, dass zur zusätzlichen Stabilisierung bzw. Sicherung der Steckverbindung wenigstens ein Stabilisator vorgesehen ist.

Dadurch ergibt sich der Vorteil, dass die Verbindung zusätzlich stabilisiert wird, ein unerwünschtes Spiel und eine unerwünschte Trennung vermieden wird, und eine verdrehungssichere Verbindung gewährleistet wird.

In Weiterbildung der Erfindung kann vorgesehen sein, dass der Stabilisator als Feststellelement zur Fixierung von Nut und Feder ausgebildet ist.

So kann eine Verbindung unabhängig von der vertikalen Ausrichtung der Nut bzw. der Feder fixiert werden und ein unerwünschtes Auseinandergleiten vermieden werden.

Im Speziellen kann vorgesehen sein, dass das Feststellelement als lösbares Feststellelement, insbesondere als eine Schraubverbindung, ausgebildet ist.

So kann mit besonders einfachen Mitteln auch ein schnelles Lösen von Verbindungen erreicht werden, wie dies bei raschen Umbauten, beispielsweise im Bühnenbereich oder Gerüstbau, erforderlich ist.

Gemäß einer weiteren Ausführungsform der Erfindung kann vorgesehen sein, dass die Nut in einen im wesentlichen flachen, insbesondere quaderförmigen, Block ausgebildet ist, welcher eine vorzugsweise ebene Rückseite aufweist, und dass der Block Durchtritte aufweist, wodurch er mittels Schrauben, Nieten od. dgl. mit einem Körper verbindbar ist, wobei die Rückseite dem Körper angrenzend angeordnet ist.

Auf diese Weise kann die Nut in einfacher Weise mit einem Körper verbunden werden, ohne dass sie in diesen eingefräst od. dgl. werden muss, wodurch für die Ausbildbarkeit der Nut die Wandstärke des Körpers unerheblich ist.

In weiterer Ausgestaltung der Erfindung kann vorgesehen sein, dass die Feder des Nut-Feder-Systems als Feder-Block ausgebildet ist, und dass der Feder-Block weitere Durchtritte aufweist, wodurch er mittels Schrauben od. dgl. mit einem Körper verbindbar ist, wobei eine weitere Rückseite an dem Körper angrenzend angeordnet ist.

Mittels des Feder-Blocks kann die Feder auf einfache Weise mit einem Körper verbunden werden, ohne dass die Ausbildbarkeit der Feder bereits bei der Konstruktion des Körpers berücksichtigt werden muss.

In anderer Ausgestaltung der Erfindung kann vorgesehen sein, dass der Stabilisator als ein Anschlagelement am Block zum Anschlag des Feder-Blocks ausgebildet ist, wobei sich dieses Anschlagelement vorzugsweise über die gesamte Breite des Blocks erstreckt.

Ein Anschlagelement wirkt zuverlässig einer unerwünschten Verdrehung entgegen und ist einfach herstellbar. Bei seiner Ausbildung über die gesamte Breite des Blocks ist die Wirkung gegen unerwünschte Verdrehung aufgrund längerer Drehradien noch besser.

Insbesondere kann vorgesehen sein, dass das Anschlagelement in Form einer Anschlagleiste am Ende gegenüber der ersten Stirnseite des Blocks angeordnet ist.

Diese Ausgestaltung ist besonders einfach und kostengünstig realisierbar.

Schließlich kann vorgesehen sein, dass der Stabilisator als wenigstens eine weitere parallel zur ersten Steckverbindung angeordnete Steckverbindung nach einem der Ansprüche 1 bis 13, die mit der ersten Steckverbindung fest, vorzugsweise einstückig, verbunden ist, ausgebildet ist.

Die Erfindung wird unter Bezugnahme auf die beigeschlossenen Zeichnungen, in welchen Ausführungsformen dargestellt sind, näher beschrieben. Dabei zeigt:
Fig. 1 die Draufsicht auf einen Block mit der Nut einer erfindungsgemäßen Steckverbindung;
Fig. 2 die Schnittansicht des Blocks von Fig. 1 längs zur Nut;
Fig. 3 die Schnittansicht des Blocks von Fig. 1 quer zur Nut;
Fig. 4 den Block von Fig. 1 im Schrägriss.
Fig. 5 die Draufsicht auf einen Federblock einer erfindungsgemäßen Steckverbindung;
Fig. 6 die Schnittansicht des Federblocks von Fig. 5 längs zur Nut;
Fig. 7 die Schnittansicht des Federblocks von Fig. 5 quer zur Nut;
Fig. 8 den Federblock von Fig. 5 im Schrägriss.
Fig. 9 die Draufsicht auf eine weitere Ausführungsform eines Blocks einer erfindungsgemäßen Steckverbindung mit einer Nut und einer weiteren Nut;
Fig. 10 die Schnittansicht des Blocks von Fig. 9 längs zur Nut;
Fig. 11 die Schnittansicht des Blocks von Fig. 9 quer zur Nut;
Fig. 12 den Block von Fig. 9 im Schrägriss.
Fig. 13 die Draufsicht auf eine weitere Ausführungsform eines Federblocks einer erfindungsgemäßen Steckverbindung mit einer Feder und einer weiteren Feder;
Fig. 14 die Schnittansicht des Federblocks von Fig. 13 längs zur Nut;
Fig. 15 die Schnittansicht des Federblocks von Fig. 13 quer zur Nut;
Fig. 16 den Federblock von Fig. 13 im Schrägriss.

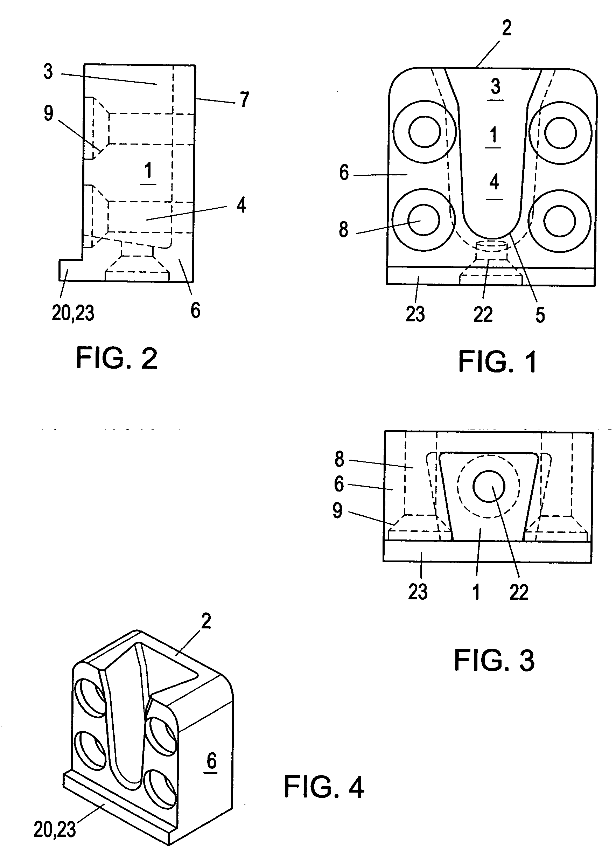

In den Fig. 1 bis 4 ist ein Block 6 in Draufsicht, in einer Schnittansicht längs bzw. zur Nut 1 quer und im Schrägriss dargestellt. Der Block 6 weist eine Nut 1 einer erfindungsgemäßen Steckverbindung für lösbare Verbindungen in der Art eines Nut-Feder-Systems auf. Die Nut 1 ist hinterschnitten und an einer ersten Stirnseite 2 randoffen, wobei der zur Längsrichtung der Nut 1 im wesentlichen senkrechte Nutquerschnitt in einem an die erste Stirnseite 2 anschließenden ersten Bereich 3 von der ersten Stirnseite 2 weg in Längsrichtung sich keilförmig verjüngend und in einem anschließenden zweiten Bereich 4 in Längsrichtung konstant bleibend ausgebildet ist, wobei der Nutquerschnitt zumindest im zweiten Bereich 4 hinterschnitten ist.

Aus Fig. 3 ist ersichtlich, dass der Nutquerschnitt im zweiten Bereich 4 schwalbenschwanzförmig ausgebildet ist, und aus Fig. 1, dass die Nut 1 an ihrer der ersten Stirnseite 2 gegenüberliegenden zweiten Stirnseite 5 geschlossen und abgerundet ausgebildet ist. Bei anderen Ausführungen einer erfindungsgemäßen Steckverbindung kann die zweite Stirnseite 4 auch offen oder geschlossen und als Polygonzug oder oval ausgebildet sein. Neben der schwalbenschwanzförmigen Ausgestaltung der Nut 1 sind bei anderen Ausführungsformen auch andere hinterschnittene Nutformen vorgesehen.

Bei der gezeigten Ausführungsform ist gemäß Fig. 1 die Längserstreckung des zweiten Bereichs 4 größer als die des ersten Bereichs 3, wobei sie sogar mehr als doppelt so groß ist.

Der erste Bereich 3 bietet den Vorteil, dass auch eine nicht exakt positionierte Feder 11 leicht in die Nut 1 eingebracht werden kann, da der konische Bereich eine seitliche Führung darstellt, wodurch die Feder 1 ausgerichtet wird. Die schwalbenschwanzförmige Nut 1 stellt ebenfalls ein Führungssystem dar, welches den richtigen Abstand zwischen Nut 1 und Feder 11 bewirkt.

Die Nut 1 kann entweder direkt in einem Körper, oder, wie in der dargestellten Ausführungsform, in dem flachen, insbesondere quaderförmigen, Block 6 ausgebildet sein, wobei der Block 6 mit dem Körper verbindbar ist, wobei eine dem Körper 6 angepasste Rückseite 7 des Blocks 6 am Körper anliegt. Für die Verbindung weist der Block 6 Durchtritte 8 auf, sodass er mittels Schrauben, Nieten od. dgl. mit dem Körper verbindbar ist.

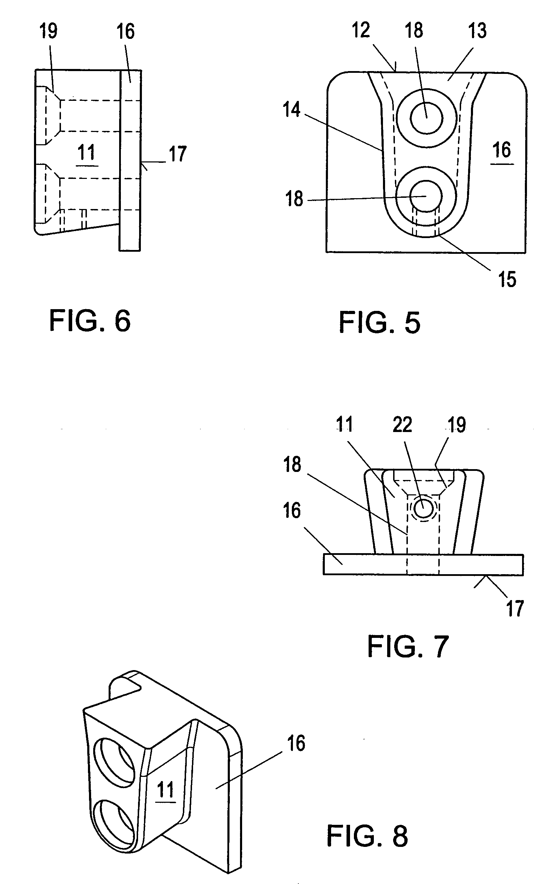

Die Feder der erfindungsgemäßen Steckverbindung ist gegengleich zur Nut 1 ausgebildet und kann entweder direkt an einem Körper angeformt oder als Feder-Block 11, der mit dem Körper verbindbar ist, ausgebildet sein. In den Fig. 5 bis 8 ist ein Federblock 11 in Draufsicht, in einer Schnittansicht längs bzw. quer zur Feder 11 und im Schrägriss dargestellt.

Die Feder 11 weist eine weitere erste Stirnseite 12, einen weiteren ersten Bereich 13 mit einem im wesentlichen zur Längsrichtung der Feder 11 senkrechten, sich in Längsrichtung der Feder 11 von der weiteren ersten Stirnseite 12 weg verjüngenden Federquerschnitt, einen weiteren zweiten Bereich 14 mit konstant bleibenden Federquerschnitt und einer der weiteren ersten Stirnseite 12 gegenüberliegenden weiteren zweiten Stirnseite 15, die abgerundet ausgebildet ist, auf.

An den Feder-Block 11 ist einstückig eine Platte 16 angeformt, welche eine weitere Rückseite 17 aufweist, die bei der Verbindung mit dem Körper an diesem anliegt. Für die Verbindung mit dem Körper mittels Schrauben od. dgl. weist der Feder-Block 11 weitere Durchtritte 18 auf.

Auf der der Rückseite 7 gegenüberliegenden Seite weisen die Durchtritte 8 und auf der der weiteren Rückseite 17 gegenüberliegenden Seite weisen die weiteren Durchtritte 18 Erweiterungen 9, 19 auf, die Schraubenköpfe aufnehmen können.

Nun ist zur zusätzlichen Stabilisierung bzw. Sicherung der Steckverbindung erfindungsgemäß wenigstens ein Stabilisator 20 vorgesehen. Ein solcher Stabilisator 20 bewirkt eine sicherere Verbindung der Teile der Steckverbindung, verhindert ein erhebliches Bewegungsspiel, insbesondere Verdrehung bzw. verhindert ein unbeabsichtigtes Auseinanderrutschen von Nut 1 und Feder 11. Der Stabilisator 20 kann beispielsweise als Feststellelement 22 zur Fixierung von Nut 1 und Feder 11 ausgebildet sein. So kann die Verbindung von Nut 1 und Feder 11 zuverlässig fixiert werden. Hierfür eignen sich beispielsweise Splinte oder Nieten. Damit die erfindungsgemäße Steckverbindung auch für rasche Umbauten geeignet ist, ist es vorteilhaft, wenn das Feststellelement 22 lösbar ausgebildet ist. Im einfachsten Fall besteht das Feststellelement 22 aus einer lösbaren Schraubverbindung. Das Feststellelement 22 ist vorteilhafter weise im Bereich der zweiten Stirnseiten 5, 15 angeordnet. Bei dieser Anordnung ist das Feststellelement auch dann leicht zugänglich, wenn die Steckverbindungen in Fräsungen von zu verbindenden Holzteilen angeordnet sind.

Eine weitere Möglichkeit zur Ausbildung eines Stabilisators 20 ist ein Anschlagelement 23 am Block 6 zum Anschlag des Feder-Blocks 11, wobei sich dieses Anschlagelement 23 vorzugsweise über die gesamte Breite des Blocks 6 erstreckt. Der Vorteil eines Anschlagelements 23 besteht darin, dass ein Anschlag ohne Betätigung eines Feststellelements 22 erzielt werden kann und daher eine rasche Steckverbindung ermöglicht wird. Die zusätzliche Fixierung wird also ohne zusätzliche Manipulation erreicht. Bei einer Erstreckung des Anschlagelements 23 über die gesamte Breite des Blocks 6 ist die Sicherung der Steckverbindung, insbesondere gegenüber Verdrehung, besonders wirkungsvoll.

Besonders einfach ist das Anschlagelement 23 in Form einer Anschlagleiste am Ende gegenüber der ersten Stirnseite 2 des Blocks 6 zu realisieren. Zur zusätzlichen Sicherung könnte die Anschlagleiste auch gewellt oder gezackt sein und die Platte 16 am gegengleichen Ende gegengleich ausgebildet sein.

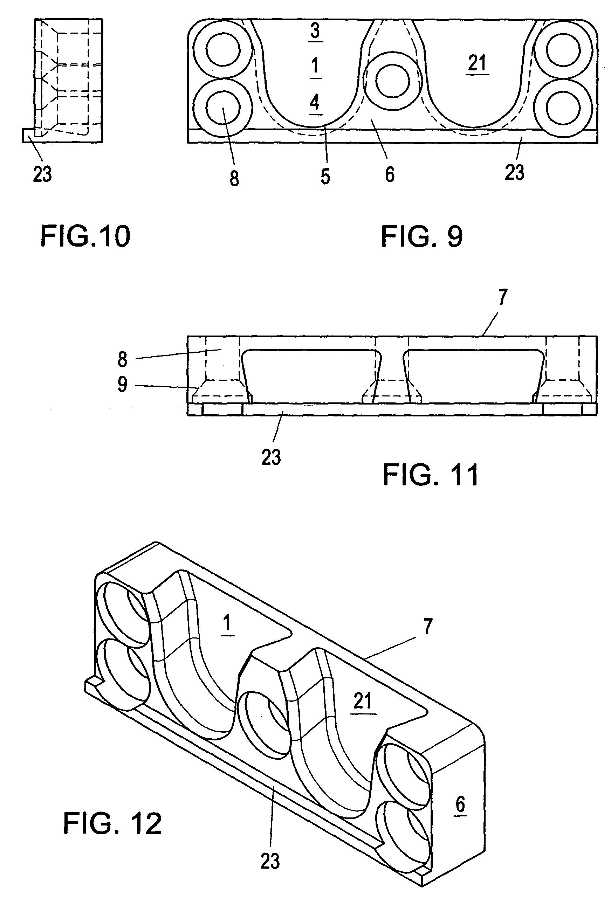

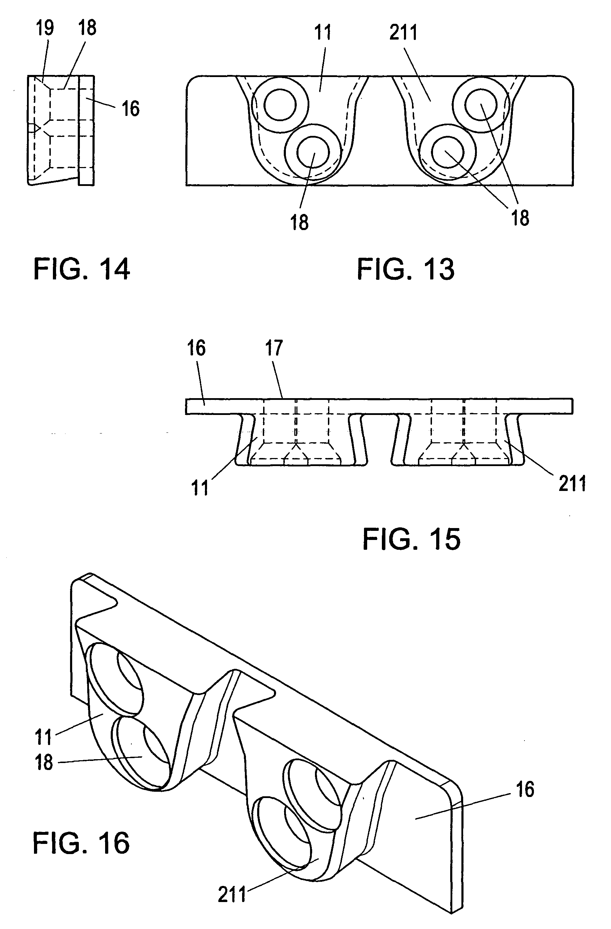

Eine weitere Möglichkeit zur Ausbildung eines Stabilisators 20 ist wenigstens eine weitere parallel zur ersten Steckverbindung angeordnete Steckverbindung 21, 211, die mit der ersten Steckverbindung fest, vorzugsweise einstückig, verbunden ist, ausgebildet ist. Demgemäß umfasst die Steckverbindung neben der Nut 1 und der Feder 11 auch wenigstens eine weitere Nut 21 und eine weitere Feder 211. Eine entsprechende Ausführungsform ist in den Figuren 9 bis 16 dargestellt. Ebenso könnten auch mehr als zwei Steckverbindungen einstückig miteinander verbunden angeordnet sein.

Die unterschiedlichen Ausführungsformen von Stabilisatoren 20, wie beispielsweise Feststellelement 22, Anschlagelement, 23 oder weitere Steckverbindung 21, 211, können auch beliebig miteinander kombiniert werden.

## Patentansprüche

1. Steckverbindung für lösbare Verbindungen in der Art eines Nut-Feder-Systems, wobei die Nut wenigstens teilweise hinterschnitten und an zumindest einer ersten Stirnseite randoffen ist und die Feder gegengleich zur Nut ausgebildet ist, wobei der zur Längsrichtung der Nut (1) im wesentlichen senkrechte Nutquerschnitt in einem an die erste Stirnseite (2) anschließenden ersten Bereich (3) von der ersten Stirnseite (2) weg in Längsrichtung sich keilförmig verjüngend und in einem anschließenden zweiten Bereich (4) in Längsrichtung konstant bleibend ausgebildet ist, wobei der Nutquerschnitt zumindest im zweiten Bereich (4) hinterschnitten ist, **dadurch gekennzeichnet, dass** zur zusätzlichen Stabilisierung bzw. Sicherung der Steckverbindung wenigstens ein Stabilisator (20) vorgesehen ist.

2. Steckverbindung nach Anspruch 1, **dadurch gekennzeichnet, dass** der Stabilisator (20) als Feststellelement (22) zur Fixierung von Nut (1) und Feder ausgebildet ist.

3. Steckverbindung nach Anspruch 2, **dadurch gekennzeichnet, dass** das Feststellelement (22) als lösbares Feststellelement, insbesondere als eine Schraubverbindung, ausgebildet ist.

4. Steckverbindung nach einem der Ansprüche 1, 2 oder 3, **dadurch gekennzeichnet, dass** die Nut (1) - wie an sich bekannt - in einen im wesentlichen flachen, insbesondere quaderförmigen, Block (6) ausgebildet ist, welcher eine vorzugsweise ebene Rückseite (7) aufweist, und dass der Block (6) Durchtritte (8) aufweist, wodurch er mittels Schrauben, Nieten od. dgl. mit einem Körper verbindbar ist, wobei die Rückseite (7) dem Körper angrenzend angeordnet ist.

5. Steckverbindung nach einem der Ansprüche 1 bis 4, **dadurch gekennzeichnet, dass** die Feder des Nut-Feder-Systems - wie an sich bekannt - als Feder-Block (11) ausgebildet ist, und dass der Feder-Block (11) weitere Durchtritte (18) aufweist, wodurch er mittels Schrauben od. dgl. mit einem Körper verbindbar ist, wobei eine weitere Rückseite (17) an dem Körper angrenzend angeordnet ist.

6. Steckverbindung nach Anspruch 4, **dadurch gekennzeichnet, dass** der Stabilisator (20) als ein Anschlagelement (23) am Block (6) zum Anschlag des Feder-Blocks (11) ausgebildet ist, wobei sich dieses Anschlagelement (23) vorzugsweise über die gesamte Breite des Blocks (6) erstreckt.

7. Steckverbindung nach Anspruch 6, **dadurch gekennzeichnet, dass** das Anschlagelement (23) in Form einer Anschlagleiste am Ende gegenüber der ersten Stirnseite (2) des Blocks angeordnet ist.

8. Steckverbindung nach einem der Ansprüche 1 bis 13, **dadurch gekennzeichnet, dass** der Stabilisator (20) als wenigstens eine weitere parallel zur ersten Steckverbindung angeordnete Steckverbindung (21, 211) nach einem der Ansprüche 1 bis 13, die mit der ersten Steckverbindung fest, vorzugsweise einstückig, verbunden ist, ausgebildet ist.
